# EUROPEAN PATENT APPLICATION

(11) **EP 3 805 161 A1**
(43) Date of publication of application: **14.04.2021**
(21) Application number: 20199997.6
(22) Date of filing: 05.10.2020
(51) Int. Cl.: C02F 1/00, C02F 1/32, C02F 1/78, C02F 103/02

(54) **LIQUID TREATMENT APPARATUS**

(30) Priority: 08.10.2019 IT 201900018164
(71) Applicant: Tecnoline S.p.A., 41033 Concordia Sulla Secchia, MO (IT)
(72) Inventor: ALBORESI, Gino, 41037 MIRANDOLA MO (IT); PROVASI, Stefano, 41033 CONCORDIA SULLA SECCHIA MO (IT)
(74) Representative: Modiano, Micaela Nadia

(57) **Abstract**

An apparatus for treating liquids, comprising at least one input terminal (2a) and at least one output terminal (2b), which can be connected temporarily to at least one duct (B) normally crossed by a liquid (A), in order to subject the liquid (A) to a disinfection treatment. The apparatus (1) comprises an ozone dispensing unit (3) which leads to a circuit (4) for the treatment of the liquid (A). The circuit (4) is interposed between the terminals (2a, 2b) and comprises at least one filter (5) for the liquid (A); furthermore, at least one portion (6) of the circuit (4), for decontamination, is subjected to the action of at least one UV-C radiation source (7).

## Description

The present invention relates to an apparatus for treating liquids.

As is known, naturally existing bacteria capable of having pathogen actions which can be harmful or even lethal for humans are numerous.

The effect of such actions considerably increases (or occurs only) when the affected person is already immunocompromised or debilitated, or when the bacteria have access to the air contained in operating rooms, or to the liquids administered to patients and/or to those used directly or indirectly for the operation of the machines used in surgery.

An example in this regard is certainly constituted by Mycobacterium chimaera, which lives normally in the ground, in the water and in water systems but it is in any case capable of moving easily and prospering in the atmosphere also.

The presence of the mycobacterium in the water of water systems usually does not cause concern, since the possible interactions with humans are usually not harmful. However, when the mycobacterium infests the water that circulates in hospital systems it can be a dangerous threat to health, since it can come into contact with immunocompromised subjects and/or obtain direct access to their internal organs, in different (and indeed much more dangerous) ways than those that it is allowed under normal conditions.

By way of example, therefore, mention is made in particular of the recent cases of infection that have affected subjects undergoing cardiac surgery and have exploded months/years after hospitalization, because of the long incubation period. It has been found that the contamination had occurred by exposure to the water of the exchangers that regulate the blood temperature in machines for extracorporeal circulation, used indeed in cardiac surgery.

The need to pay maximum attention to the water (or other liquids) circulating in the machines used in the operating room, since said water is a potential vehicle of bacteria, has therefore increased. These bacteria, as a result of the stagnation of water vapor inside ducts and/or as a result of droplets of water falling in the operating room (for example during the steps for preparing or cleaning the machine), may affect the patient directly or indirectly (ending up suspended in the surrounding air).

Manufacturing companies and health care facilities have studied various methods for preventing these infections, with results that are in any case unsatisfactory. In fact, these methods include the requirement of the daily replacement of the water that flows through the circuits and/or frequent use of chemical disinfectants, to be mixed with the water itself.

However, these solutions are very laborious and lead to an unwanted expenditure of time and, in the case of chemical disinfectants, are not free from other contraindications.

The aim of the present invention is to solve the problems described above, providing an apparatus that ensures practical methods for treating liquids, for an effective prevention of infections due to bacteria and mycobacteria.

Within the scope of this aim, an object of the invention is to provide an apparatus for treating liquids rapidly and at the same time completely, ensuring an effective prevention of infections.

Another object of the invention is to provide an apparatus that ensures high reliability in operation and is versatile, being usable for machines and instruments of various types.

Another object of the invention is to provide an apparatus that offers practical methods for monitoring the performed treatments.

Another object of the invention is to provide an apparatus that uses a technical and structural architecture that is alternative to those of apparatuses of the known type.

Another object of the invention is to provide an apparatus that can be obtained easily starting from commonly commercially available elements and materials.

Yet another object of the invention is to provide an apparatus that has low costs and is safe in application.

This aim and these and other objects which will become better apparent hereinafter are achieved by an apparatus for treating liquids, comprising at least one input terminal and at least one output terminal, which can be connected temporarily to at least one duct normally crossed by a liquid, in order to subject the liquid to a disinfection treatment, characterized in that it comprises an ozone dispensing unit which leads to a circuit for the treatment of the liquid, which is interposed between said terminals and comprises at least one filter for the liquid, at least one portion of said circuit, for decontamination, being subjected to the action of at least one UV-C radiation source.

Further characteristics and advantages of the invention will become better apparent from the description of a preferred but not exclusive embodiment of the apparatus according to the invention, illustrated by way of non-limiting example in the accompanying drawings, wherein:
Figure 1 is a schematic view of some components of the apparatus according to the invention;
Figure 2 is a block diagram of a use of the apparatus according to the invention;
Figure 3 is an axonometric view of an additional component for the apparatus according to the invention;
Figure 4 is a front elevation view of the component of Figure 3;
Figure 5 is a lateral elevation view of the component of Figure 3.

With reference to the figures, the reference numeral 1 generally designates an apparatus for treating liquids A, which first of all comprises at least one input terminal 2a and at least one output terminal 2b.

The terminals 2a, 2b can be connected in a temporary manner to at least one duct B normally crossed by a liquid A in order to subject said liquid to a disinfection treatment. In other words, faced with the need to counteract the colonization of bacteria, mycobacteria and other infesting micro-organisms in a liquid A circulating in any system, instrument, machinery or network, which comprises one or more ducts B, said ducts are indeed temporarily connected to the apparatus 1 (typically, by disconnecting a part of the system that forms a closed path with them).

In this manner, a new closed path is formed which comprises indeed at least one duct B and the apparatus 1, with the latter receiving the liquid A and being able to apply thereto its action (which will be described in the pages that follow). The path can be performed cyclically by the liquid A up to the preset end of the treatment; after that, the normal connections for the ducts B are restored so that the liquid A, conveniently treated, can resume its normal use.

In this context, it should be specified that the field of application of the invention extends to any duct B (or group of ducts B) used in any context, and likewise any type of liquid A is subjected to treatment.

At the same time, in the preferred application the apparatus 1 is intended for health care facilities and hospitals, where it can be used for the disinfection of water (the liquid A) circulating in machines and systems located in the operating room or in any case in environments visited by immunocompromised or debilitated subjects.

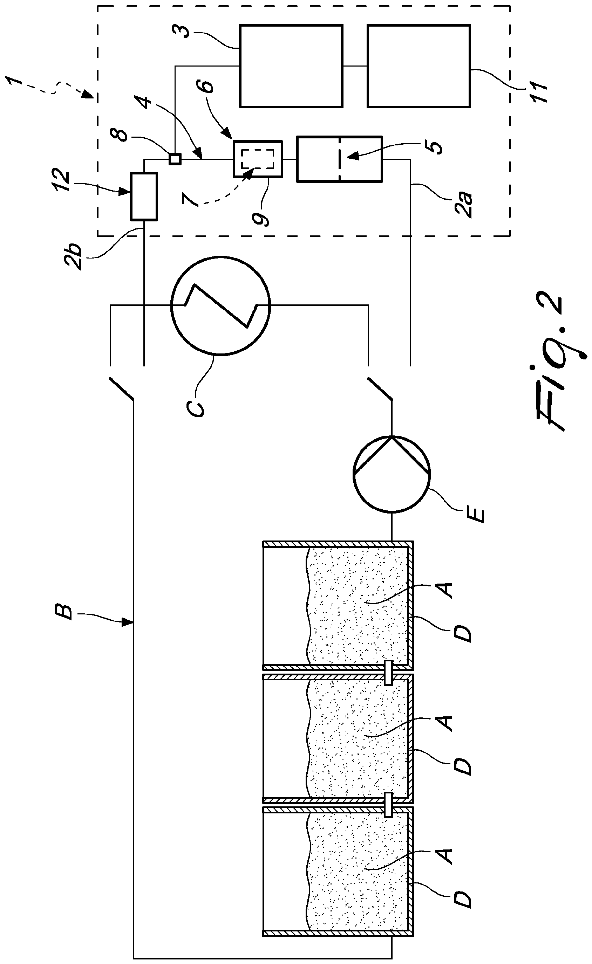

With reference indeed to the preferred application (but, it should be repeated, not exclusively) of the invention, Figure 2 shows an example of use of the apparatus 1 in relation to devices for extracorporeal circulation, which as is known are medical machines used mainly in cardiac surgery in order to ensure the survival of the patient during the operation by replacing temporarily his cardiopulmonary functions.

As is known, such devices comprise a heat exchanger C that is crossed by blood, indeed intended for extracorporeal circulation, and by a liquid A constituted by water, which has the task of heating and/or cooling said blood (made to circulate in the exchanger C), as a function of the specific requirements and of the surgical needs. The normal (closed) path of the water involves, besides the exchanger C and the connecting ducts B, one or more tanks D and a pump E (which is indeed in charge of the circulation of the liquid A in the ducts B and in the other components just introduced).

As shown schematically in Figure 2, the use of the apparatus 1 provides for disconnecting temporarily the exchanger C from the ducts B, connecting said ducts to the terminals 2a, 2b in order to subject the water to the desired disinfection treatment. After performing one or more cycles, subjecting the entire mass of water to the disinfection, the terminals 2a, 2b are disconnected and the connection of the exchanger C to the ducts B is restored, in order to resume the normal operation of the device for extracorporeal circulation.

It should be noted, however, once again, that the example introduced above (and shown in Figure 2) is for illustrative purposes only and should not be intended in any way to limit the protective scope claimed herein.

According to the invention, the apparatus 1 comprises an ozone dispensing unit 3 which leads to an (open) circuit 4 for the treatment of the liquid A.

The dispensing unit 3 can be of the commercial type (supplied with an oxygen cylinder for example) or provided ad hoc, as a function of the specific requirements. In the preferred non-limiting embodiment, the dispensing unit 3 is a generator with sealed ozone-generating cells using the corona effect, provided with a 96% pure double dielectric made of ceramic, without the use of an internal electrode. Said cells withstand pressures up to 1.5 bar and the dispensing unit 3, supplied with 10 g/h of oxygen with an ozone concentration equal to 70 ppm nominal, can ensure an output ozone concentration of 50g/m³, equal to 23,500 ppm, with a maximum operating pressure of 0.7 bar.

The circuit 4 is interposed between the terminals 2a, 2b and comprises at least one filter 5 for the liquid A.

More particularly, the filter 5 is an antibacterial filter and/or is constituted by a microporous filtering membrane, but the possibility to choose additional embodiments of the filter 5 is in any case within the protective scope claimed herein. The scope of protection claimed herein is extended in fact to any practical solution that the person skilled in the art would know how to adopt, in order to retain impurities, sediments, sludge, biological structures and pathogens that can be carried by the liquid A.

Furthermore, according to the invention at least one portion 6 of the circuit 4, for decontamination, is subjected to the action of at least one UV-C radiation source 7 (obviously also comprised in the apparatus 1). In other words, the source 7 (positioned in any point with respect to the rest of the circuit 4) is directed toward the decontamination portion 6, so as to strike it with the UV-C radiation emitted by it. It is possible to have a number at will of decontamination portions 6 and/or sources 7.

It is specified that, as is known in the art, the expression UV-C radiation (sometimes referenced as "UVC" radiation) means (in the present description as well) the ultraviolet radiation with a wavelength comprised specifically between 280 nm and 100 nm (a sub-interval in the range of UV or ultraviolet radiation).

In practice, therefore, the liquid A is first of all mixed with the ozone supplied by the dispensing unit 3, which as is known has a strong oxidizing power and is capable of performing a broad-spectrum antibacterial, antiviral and antimycotic action. The effect of the source 7 is added to the effect of the ozone, so as to obtain a complete and effective disinfection of the liquid A and not only of said liquid. In fact, by making the liquid A flow cyclically through the duct B (keeping the duct B connected to the apparatus 1), the mixture of liquid A and ozone obtained in the circuit 4 also flows through the duct B and the other components involved (such as the tanks D of the example in Figure 2), performing the beneficial effect on them as well.

The impurities, sediments, sludge, biological structures and pathogens that progressively end up in suspension in the liquid A, while it flows through the components associated with the duct B (separation from the inner walls of said components is facilitated by the ozone), are collected and retained by the filter 5, from which they can be removed at the end of the treatment (after restoring the normal operation of the duct B). Again, in this context it is noted again that the source 7 can cooperate with the ozone in reducing the bacterial load and completely disinfecting the liquid A.

Usefully, in the preferred embodiment, the circuit 4 comprises in series the filter 5, the decontamination portion 6 and a connector 8 arranged in connection with the ozone dispensing unit 3 (where indeed the mixing of the ozone and the liquid A occurs). In other words, the decontamination portion 6 is arranged downstream the filter 5 (with respect to the direction of flow through the circuit 4 by the liquid A) and the connector 8 is arranged downstream of the decontamination portion 6 (with respect to the direction of flow through the circuit 4 by the liquid A).

In particular, by virtue of a convenient sizing of its passage cross-sections, the connector 8 (typically with a "Y" shape) is configured to determine the acceleration by Venturi effect of the mixture in output, composed of the liquid A and the ozone.

It should be noted that the mixture of liquid A and ozone is kept typically (but not exclusively) heterogeneous, since the ozone is conveyed at least partially in the gaseous phase. As can be seen also in Figure 2, the arrangement introduced above causes the mixture of liquid A and ozone to pass through the filter 5 at its new entry in the apparatus 1, only after having flowed almost completely through the circuit 4 and especially the ducts B and the other components, and therefore after accumulating the maximum quantity of impurities.

Other mutual arrangements of the components of the circuit 4 and in general of those that are part of the apparatus 1 are not excluded.

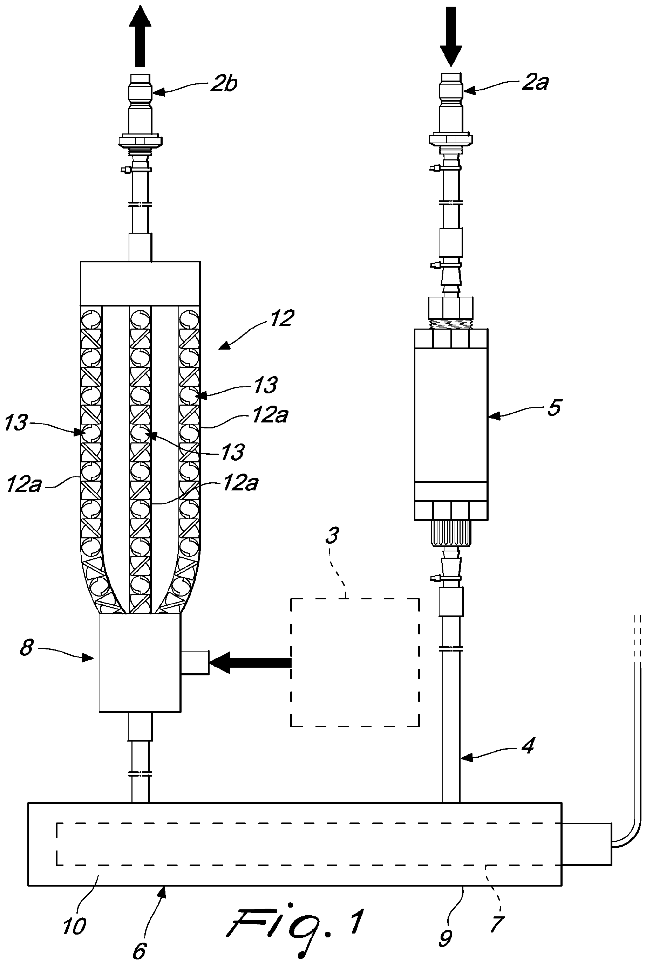

Advantageously, the source 7 consists of a UV-C lamp (for example tubular), which, as shown schematically in the accompanying Figures 1-2, is accommodated in an at least partially transparent shell 9 contained in (or constituting) the decontamination portion 6. An interspace 10 which can be crossed by the liquid A (while it is struck by the radiation) is formed between the shell 9 and the decontamination portion 6.

In the preferred embodiment, the UV-C lamp has quartz walls, which ensure an optimum passage of the radiation over time, since they reduce or prevent the risk of deposits of particles or dirt, which vice versa might cause a progressive opacification of the surfaces.

The supply of the dispensing unit 3 can be any, without abandoning the protective scope claimed herein; in the preferred solution, in any case, the apparatus 1 comprises an oxygen concentrator 11, which is connected to the outside environment and is connected to the dispensing unit 3, so as to supply the latter with oxygen drawn from the outside environment (and making it in this sense self-sufficient, without having to provide bulky cylinders and without having to worry about their periodic top-up).

In particular, the concentrator 11 can be of the variable dispensing type, being able to reach up to a maximum of 3 l/min with a concentration even greater than 90%.

Conveniently, the circuit 4 comprises at least one mixing portion 12, which is arranged downstream the connector 8 and accommodates at least one operating element configured for the optimum mixing of the liquid A that circulates in the circuit 4 with the ozone that originates from the dispensing unit 3.

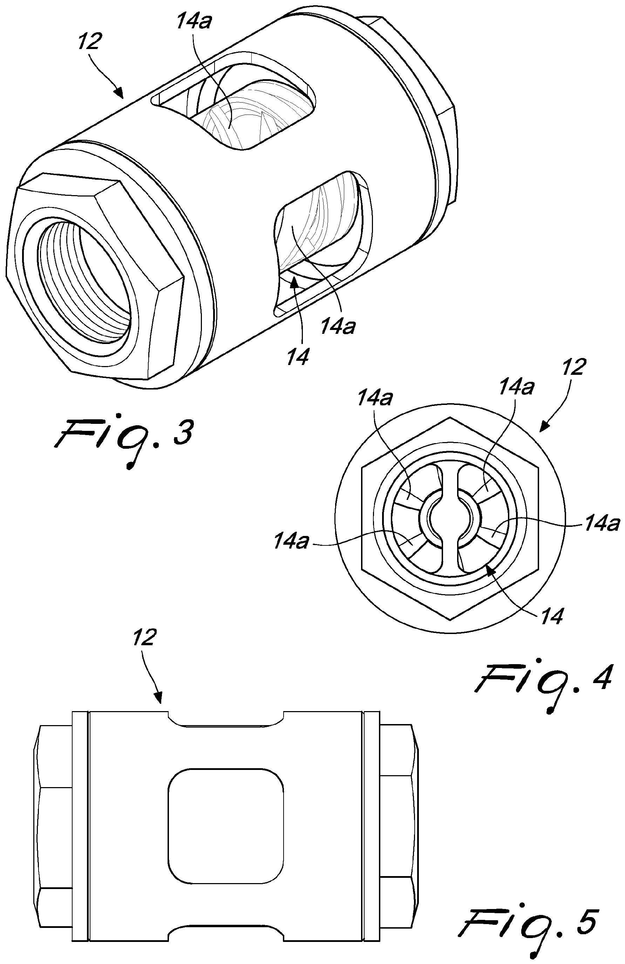

The operating element is chosen between a spiral-shaped element 13 (static element), which is accommodated coaxially and rigidly in the mixing portion 12, and an impeller 14 (dynamic element), which is accommodated coaxially and rotatably in the mixing portion 12. In greater detail, the impeller 14 is turned by the liquid A that circulates in the circuit 4. A possible mixing portion 12 which accommodates spiral-shaped elements 13 is shown in Figure 1, while an example of a mixing portion 12 accommodating an impeller 14 is the subject of Figures 3-5. However, it is not excluded to use other types of operating elements besides those described above.

The mixing portion 12 can have a number at will of tubes 12a arranged in parallel (for example three, as in the accompanying Figure 1) and/or in series, each one accommodating a respective spiral-shaped element 13 and/or a respective impeller 14 (or other operating element): the number can in fact be chosen as a function of the flow-rate of the ducts B and of the machines that one wishes to decontaminate.

In order to increase the mixing effectiveness, more generally the protective scope claimed herein comprises any combination of spiral-shaped elements 13 and impellers 14 arranged in series and/or in parallel, as a function of the specific requirements. In the case of two impellers 14 in series, for example one of them can be right-handed and the other left-handed (also, any shape of the vanes 14a of the impeller 14 and/or of the turns of the spiral-shaped element 13 falls within the protective scope claimed herein).

The presence of the operating element imposes a remarkable winding path to the mixture of liquid A and ozone, forcing it to a spiral movement or in any case to a more turbulent motion around the turns of the spiral-shaped element 13 and/or the vanes 14a of the impeller 14: this indeed facilitates a more intimate mixing between the ozone and the liquid A, preventing the former from sliding on the free surface of the latter, as could happen instead in the case of a flow that proceeds unhindered along the circuit 4.

Favorably, the apparatus 1 comprises at least one sensor configured to detect the execution of each disinfection treatment: the sensor can be of any type (it can be passive, for example) and can be adapted for measuring any value directly or indirectly correlated to the execution of the disinfection treatment. In fact, it is possible to measure the flow rate of liquid A that passes through the circuit 4, or the quantity of ozone dispensed by the dispensing unit 3, the power-on and/or power-off of said dispensing unit 3 and/or of the source 7, or others.

The sensor (or a group of mutually cooperating sensors) is in turn associated with an electronic control and management unit (also comprised in the apparatus 1). The electronic unit can be of any type and for example can be an electronic controller mounted on board the apparatus 1; it is not excluded, however, to use a different type of electronic unit, which could be therefore any hardware platform, reprogrammable or not, capable of acting, if necessary, (automatically and/or following the intervention of a user) according to what is described hereinafter. The electronic unit can be supplied by electricity supply mains available in the room in which the apparatus 1 is arranged, by means of an electrical cable provided with it.

The electronic unit is provided with a module for storing data and instructions for processing and/or storing, in said module, the information provided by the sensor (or group of sensors). This allows, for example, to track the performed treatment cycles, information which is useful for evaluating compliance with any preset standards or safety protocols.

The electronic unit can be responsible for the activation of the dispensing unit 3 and/or of the concentrator 11; furthermore, it is specified that the apparatus 1 can have in turn a hydraulic machine capable of forcing the circulation of the liquid A (where one does not wish to resort to external elements such as pump E). In this case, said machine, too may be actuated by the electronic unit.

In the preferred embodiment, which allows for example an easy installation of the apparatus 1 in health care facilities and hospitals, said apparatus comprises a box-like casing (optionally mounted on wheels), which is provided with terminals 2a, 2b and accommodates at least the dispensing unit 3 and the circuit 4 (and preferably also the other components described so far).

In the (typical, but not exclusive) case in which one or more machines (such as the extracorporeal circulation device) require periodic disinfection, the apparatus 1 may be positioned in the same room or building, periodically connecting and disconnecting their ducts B to/from the terminals 2a, 2b that face the outside the casing, so as to allow indeed the execution of the periodic treatment of the liquid A.

Usefully, the apparatus 1 comprises a control interface, which is arranged along the casing and can have a display (even of the touch-screen type) as well as buttons, switches and the like.

In greater detail, the control interface is functionally connected to the electronic unit and comprises a control panel which is configured to adjust the operating parameters and/or selectively activate the disinfection treatment.

In other words, by means of the panel a user can interact with the electronic unit which oversees the operation of the apparatus 1, by activating its various components and therefore commanding the execution of the disinfection treatment; likewise, the user can see on the display or on the panel information and data (and/or alarm messages) related to the operation of the apparatus 1.

It should be noted that ozone is an unstable substance, and therefore its useful action ends (typically after approximately twenty/thirty minutes) when it turns back into oxygen, without leaving any possibly damaging traces in the circuit 4 and without causing any damage to the machines involved.

Nevertheless, for further safety assurance, positively the apparatus 1 comprises a gas concentration detector (chosen of any type, even of a known type), which is configured to monitor the concentration of ozone in the atmosphere that surrounds the circuit 4. For example, one can choose a detector with a precision of ±0.01 ppm ± 10%. It should be noted that the detector can be arranged inside the casing or outside it and the measuring zone also can be arranged inside or (preferably) outside the casing. In any case, the presence of the detector ensures maximum safety in use for the apparatus 1, since any leakages or losses of ozone, potentially dangerous for the health of individuals, will be promptly detected (and, preferably, indicated by means of the emission of an optical/acoustic alarm signal by the electronic unit and the interface).

The operation of the apparatus according to the invention has already substantially been described in the preceding pages.

However, it is noted again that a duct B (or a plurality of ducts B), leading to or being part of systems (or devices, instruments or machines) of any type, can be connected to the terminals 2a, 2b. This entails typically that part of the system is isolated and temporarily replaced by the circuit 4, in order to provide a closed temporary path. Thus, the liquid A which usually circulates inside the system is temporarily (and cyclically) conveyed into the apparatus 1 by making it flow in particular through the circuit 4.

In this manner, the liquid A (typically, but not necessarily, water) is subjected to the action of the UV-C radiation source 7, which allows a first decontamination, and then mixed with the ozone that originates from the dispensing unit 3. The mixture thus formed exits from the apparatus 1 (from the output terminal 2b), flows through the duct B or ducts B and the machines associated therewith. Thus, the ozone applies to them and to said liquid A (obviously) its oxidant and disinfectant action, against bacteria and mycobacteria of all kinds (and in particular against Mycobacteria chimaera).

In addition to the liquids A, the ozone can be released above the water surface in the tanks D, or in other structures involved, performing its useful function on all the walls (even the ceiling) of these structures, preventing or destroying the formation of colonies of bacteria in any part of the system connected to the apparatus 1. Also any stagnation of water vapor, as well as the outflow of water or other liquid A outside (for example, the falling of droplets on the floor of the operating room), is not a danger for the health of individuals (and in particular of patients), since by having provided the disinfection treatment beforehand, the water is safe, as it is free from microorganisms (chimaera and/or others).

Preferably (but not necessarily), the liquid A has to follow a closed path, so that once the forced circulation of the liquid A has been started it can cyclically enter and exit the apparatus 1: when it reenters, in fact, the liquid A passes through the filter 5, which collects first of all the bacteria and other organisms that have ended up in suspension. As already noted, the filter 5 can collect other impurities, such as sediments or sludge, that the ozone removes from the walls of the ducts B, of the tanks D, etcetera.

The duration of the treatment, the number of cycles, the travel speed of the liquid A, as well as any other operating parameter, can be adjusted or preset at will, by acting for example on the electronic unit via the interface, as a function of the prerogatives and the specific requirements of the machines to be subjected to disinfection, in order to treat the liquids A quickly and at the same time completely, ensuring an effective prevention of infections.

When the treatment is considered completed, it is sufficient to disconnect the ducts B from the terminals 2a, 2b (for example by reconnecting the ducts to the exchanger C or in any case restoring the normal connections for the systems and ducts B): the apparatus 1 thus becomes available for the treatment of other ducts B and/or remains waiting for the next (periodic) disinfection for the same machine (be it an extracorporeal circulation device or other).

The action of the ozone therefore allows to treat and disinfect liquids A and the systems or structures that are crossed by them; the source 7 allows to increase the effectiveness of the disinfecting and decontaminating action, at the same time reducing the time needed for the suppression of the bacterial load.

The use of the apparatus 1 imposes on the operator a small number of simple operations, which in practice consist simply in connecting the ducts B to be treated to the terminals 2a, 2b, so as to provide a temporary closed path crossed by the liquid A. The apparatus 1 can then be started by means of adapted commands so that the liquid A is pushed in and out of the casing, while the dispensing unit 3 and the source 7 perform the functions described above.

Therefore, it has been shown that the apparatus according to the invention fully achieves the intended aim, since it ensures practical and quick methods for treating liquids A, for an effective prevention of infections due to bacteria and mycobacteria, which are suppressed by virtue of the joint action of ozone and UV-C radiation and then intercepted and removed by the filter 5.

As mentioned, the apparatus 1 must simply be connected to the ducts B through the terminals 2a, 2b and this makes it compatible with substantially any instrument or machine, confirming the high versatility of the invention. The invention comprises few and simple components, ensuring the low cost and reliability of the solution.

The electronic unit allows to provide to the apparatus 1 with a variety of functions and additional features, particularly offering practical methods for monitoring the treatments performed.

Finally, it should be noted that the activation of the electronic unit, and in general of the treatment cycles, may be dependent on a payment or in any case on the provision of a key or other identification device, preferably personalized, by the operator. This allows in fact on the one hand to track the performers of the treatments and on the other to ensure practical methods for revenue or reporting by the company that produces and markets said apparatuses 1 (optionally supplying them for renting or leasing to the hospital facility, or facility of other type, interested in its use).

The invention thus conceived is susceptible of numerous modifications and variations, all of which are within the scope of the accompanying claims; all the details may furthermore be replaced with other technically equivalent elements.

In the examples of embodiment shown, individual characteristics, given in relation to specific examples, may actually be replaced with other different characteristics that exist in other examples of embodiment.

In practice, the materials used, as well as the dimensions, may be any according to the requirements and the state of the art.

The disclosures in Italian Invention Patent Application No. 102019000018164, from which this application claims priority, are incorporated by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for treating liquids, comprising at least one input terminal (2a) and at least one output terminal (2b), which can be connected temporarily to at least one duct (B) normally crossed by a liquid (A), in order to subject the liquid (A) to a disinfection treatment, **characterized in that** it comprises an ozone dispensing unit (3) which leads to a circuit (4) for the treatment of the liquid (A), which is interposed between said terminals (2a, 2b) and comprises at least one filter (5) for the liquid (A), at least one portion (6) of said circuit (4), for decontamination, being subjected to the action of at least one UV-C radiation source (7).

2. The apparatus according to claim 1, **characterized in that** said circuit (4) comprises in series said filter (5), said decontamination portion (6) and a connector (8) arranged in connection with said dispensing unit (3).

3. The apparatus according to claim 1 or 2, **characterized in that** said source (7) is constituted by an UV-C lamp, accommodated in an at least partially transparent shell (9) contained in said decontamination portion (6), an interspace (10) which can be crossed by the liquid (A) being formed between said shell (9) and said decontamination portion (6).

4. The apparatus according to one or more of the preceding claims, **characterized in that** it comprises an oxygen concentrator (11), which is connected to the outside environment and is connected to said dispensing unit (3), for the supply of said dispensing unit (3) with oxygen drawn from the outside environment.

5. The apparatus according to one or more of the preceding claims, **characterized in that** said circuit (4) comprises at least one mixing portion (12), arranged downstream of said connector (8) and accommodating at least one operating element which is configured for the optimum mixing of the liquid (A) that circulates in said circuit (4) with the ozone that originates from said dispensing unit (3), said at least one active element being chosen between a spiral-shaped element (13), which is accommodated coaxially and rigidly in said mixing portion (12), and an impeller (14), which is accommodated coaxially and rotatably in said mixing portion (12), said impeller (14) being turned by the liquid (A) that circulates in said circuit (4).

6. The apparatus according to one or more of the preceding claims, **characterized in that** it comprises at least one sensor configured to detect the execution of each disinfection treatment, said sensor being associated with an electronic control and management unit provided with a module for storing data and instructions for processing and/or storing, in said module, the information provided by said sensor.

7. The apparatus according to one or more of the preceding claims, **characterized in that** it comprises a box-like casing, which is provided with said terminals (2a, 2b) and accommodates at least said dispensing unit (3) and said circuit (4).

8. The apparatus according to claims 6 and 7, **characterized in that** it comprises a control interface, which is arranged along said casing and is functionally connected to said electronic unit, said interface comprising a control panel which is configured to adjust the operating parameters and/or selectively activate the disinfection treatment.

9. The apparatus according to one or more of the preceding claims, **characterized in that** it comprises a gas concentration detector, configured to monitor the concentration of ozone in the atmosphere that surrounds said circuit (4).

10. The apparatus according to one or more of the preceding claims, **characterized in that** said connector (8) is configured to accelerate by Venturi effect the mixture in output, composed of the liquid (A) and ozone.
